Europäisches Patentamt

European Patent Office

Office européen des brevets

(19)

(11) Publication number: **0 143 620**
A2

(12) # EUROPEAN PATENT APPLICATION

(21) Application number: **84308124.1**

(22) Date of filing: **23.11.84**

(51) Int. Cl.⁴: **G 11 B 3/58**, G 11 B 23/50

(30) Priority: **25.11.83 IE 2780/83**

(43) Date of publication of application: **05.06.85**
Bulletin 85/23

(84) Designated Contracting States: **AT BE CH DE FR GB IT LI LU NL SE**

(71) Applicant: **RYAN PLASTICS IRELAND LIMITED,
Carrigeen Grannagh, Waterford County Waterford (IE)**

(72) Inventor: **Fritsch, Joseph Frederick, 4, Wellington
Terrace Dunmore East, Waterford County Waterford (IE)**

(74) Representative: **Opperman, Stuart Richard et al,
Haseltine Lake & Co. Hazlitt House 28 Southampton
Buildings Chancery Lane, London WC2A 1AT (GB)**

(54) **Record disc cleaning apparatus.**

(57) Apparatus for cleaning a record disc comprises a plurality of cylindrical cleaning members (12) mounted side-by-side in a housing (10), each cleaning member having a convex surface portion which extends below the housing for contacting the surface of a record disc to be cleaned. An arm (20) and a collar (21) extend from one side of the housing for locating the housing for rotation about the centre of the disc, the cylindrical cleaning members extending across the surface of the disc transverse to the direction of rotation of the housing. Each cylinder is restrained against rotation by brushing contact with a disc but is capable of manual rotation to bring a different portion of its surface below the housing to provide a fresh cleaning surface. A knob is rotatably mounted at the top of the housing (10), and is constrained to rotate substantially in a single direction only thereby permitting only a single direction of rotation of the housing (10). At least one of the cleaning surfaces (12) is conductive and is electrically connected via a sliding contact to a conductive part of the knob.

- 1 -

RECORD DISC CLEANING APPARATUS

This invention relates to an apparatus for cleaning a record disc, for example a long playing audio record disc.

A record cleaner is known which essentially constitutes a flat elongated brush. However, such brush type cleaners have the disadvantage that it is the leading edge of the brush in contact with the record disc which collects most of the dust and the remainder of the brush surface is relatively ineffective to pick up any dust which passes the leading edge. Thus the leading edge soon becomes clogged and the brush needs frequent cleaning. Furthermore, the brush is not ergonomically designed for easy rotation around a stationary record disc with the result that the user often uses the brush held stationary with the disc rotating on a turntable beneath it, and this causes stress on the bearings and belt of the turntable.

Accordingly, the present invention provides apparatus for cleaning a record disc, the apparatus comprising a plurality of elongated cleaning members mounted side-by-side in a housing, each cleaning member having a cleaning surface which extends below the housing for contacting the surface of a record disc to be cleaned, and means for locating the housing for rotation about the centre of the disc, the cleaning members extending across the surface of the disc transverse to the direction of rotation of the housing.

By providing multiple cleaning surfaces the invention in effect provides multiple "leading edges" for the cleaning apparatus. Thus any dust passing the first cleaning surface has a high chance of being trapped by a subsequent cleaning surface with a consequent high cleaning efficiency overall. Furthermore, the provision of the locating means which constrains the housing to rotate about the centre of the disc facilitates manual rotation of the apparatus on a stationary disc.

Preferably, each cleaning surface has a convex cross-section which thus limits the area of contact of the surface to a narrow strip thereby eliminating much of the redundant area behind the leading edge. Furthermore, we have found that a convex cleaning surface provides a more efficient cleaning action than a flat surface. In the preferred embodiment of the invention each cleaning member is in the form of a cylinder which is mounted in the housing for rotation about its longitudinal axis and which has a longitudinal portion of its outer surface extending below the housing to provide the said convex cleaning surface. In use the cylinder is restrained against rotation caused solely by brushing contact with a disc during cleaning, but is capable of manual rotation to bring a different longitudinal portion of its surface below the housing when it is desired to provide a fresh cleaning surface.

The cylinder may be restrained against rotation during cleaning by friction in its mounting, such friction being greater than that exerting by a disc during cleaning, or by mechanical means which provides a positive locking of the cylinder in a selected angular position.

In the embodiment of the invention, the cleaning members are mounted in respective adjacent portions of the housing which are connected together with a limited degree of flexibility, and the locating means includes an arm extending from one side of the housing in the opposite direction to the cleaning members, the housing and the arm also being connected together with a limited degree of flexibility. This enables the individual housing members to flex relative to one another to accommodate slight wraps and bumps in the record surface while remaining in effective contact with the latter, and also permits flexing of the housing as a whole relative to the locating arm.

The arm and the housing may be formed as a one-piece moulding of plastics material, the flexible connections between the adjacent housing portions and between the arm and the housing being provided by portions of the plastics moulding having a shallow cross-section whose width is reduced compared to the dimensions of the housing portions.

The arm may include a stud spindle for downward insertion into the central aperture of a record disc if it is desired to clean the disc off the turntable, or it may have a hole which fits over the spindle of the turntable for cleaning while the disc is on the turntable. If a spindle is provided which is removable from a hole in the arm either, cleaning technique can be used.

The apparatus preferably includes a knob which is rotatably mounted at the top of the housing to assist in the manual rotation of the housing around a stationary record disc.

Furthermore, at least one of the cleaning surfaces is conductive and is electrically connected via a sliding contact to a conductive portion of the knob whereby static electricity may be discharged through the user. This overcomes a further disadvantage of the prior brush-type record cleaners which usually have a non-conductive plastics handle or cover which prevents the conduction of static electricity away from the record surface.

An embodiment of the invention will now be described, by way of example, with reference to the accompanying drawings, in which:

Figure 1 is a bottom plan view of a cleaning apparatus according to the invention,

Figure 2 is a top plan view of the cleaning apparatus,

Figure 3 is a side view of the cleaning apparatus,

Figure 4 is a perspective view of one of the

- 4 -

cylindrical cleaning members,

Figure 5 is a cross-section through the knob of Figures 2 and 3,

Figure 6 is a cross-section through the knob in another embodiment of the invention, and

Figures 7a, 7b, 7c and 7d illustrate another construction of one of the housing portions and cleaning members.

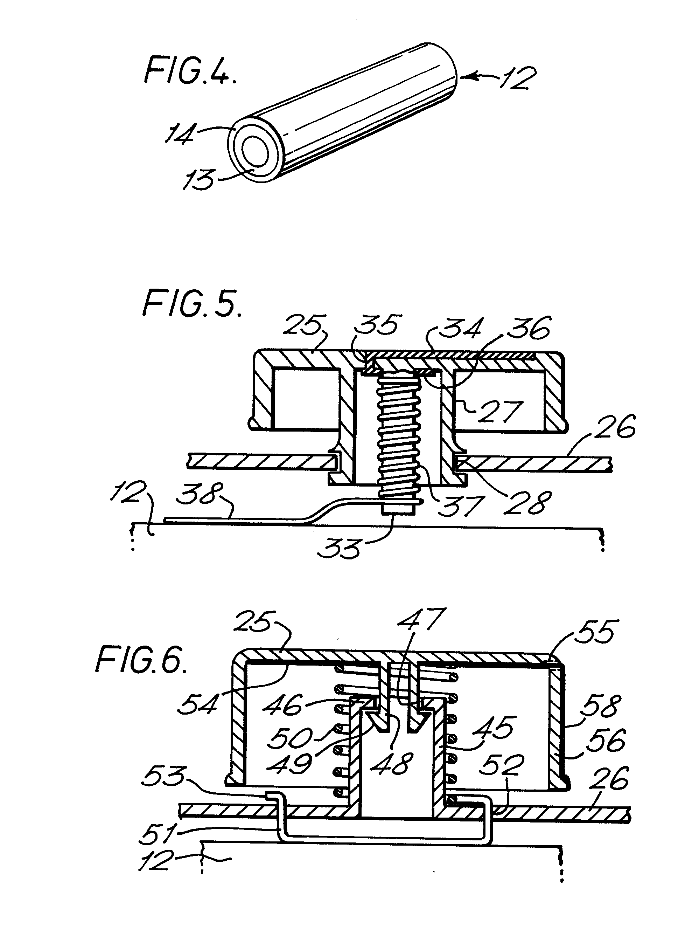

Referring to the drawings, the apparatus includes a housing 10 of plastics material comprising three parallel elongated portions 11 arranged side-by-side each for accommodating a respective cleaning member 12. Each cleaning member 12, figure 4, comprises a plastics tube 13 covered with a suitable record cleaning material 14 such as a nylon fibre material. Each member 12 is mounted in a respective housing portion 11 between a pair of downwardly extending lugs 15 at opposite ends of the respective housing portion 11. In particular, each lug 15 includes a part spherical projection 16 which engages in a respective end of the hollow tube 13.

The separation of each pair of lugs 15 is slightly less than the length of the corresponding tube 13 so that the lugs 15 are deformed mutually outwardly somewhat when the member 12 is inserted so that the lugs bear resiliently on the opposite ends of the tube. This provides a frictional engagement between the lugs 15 and the tube 13 so that the member 12 is not freely rotatable in the respective housing portion. The reason for this will be explained later.

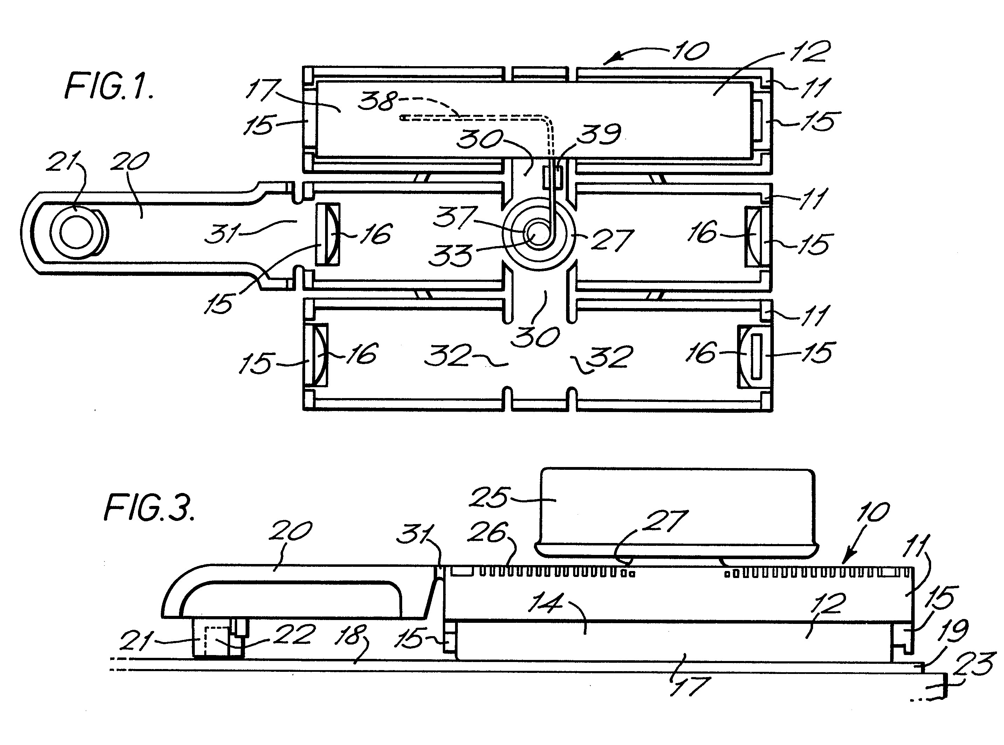

It is to be understood that although only one member 12 is shown in place in the bottom plan view of figure 1, this is in order to show details of the housing 11 which would otherwise be obscured and that in use all three housing portions 11 will contain a respective cleaning member 12.

As seen in figure 3, a longitudinal portion 17 of the outer surface 14 of each member 12 extends below the housing 10 and constitutes a cleaning surface of convex cross-section for contacting the surface 18 of a record disc 19 to be cleaned.

The apparatus further includes an arm 20 extending from one side of the housing 10 in the direction opposite to the cleaning members 12, the arm having a downwardly extending collar 21 at its free end which in use is adapted to engage over the spindle 22 of a turntable 23 on which the record disc 19 is placed for cleaning. Thus the housing 10 may be properly located for rotation about the centre of the disc 19 for cleaning the latter, the cylindrical cleaning members 12 extending across the disc surface 18 transverse to the direction of rotation of the housing 10 which is indicated by the arrow 24, figure 1. If desired, the centre cleaning member 12 may be displaced radially outwardly relative to the two members 12 on either side so that the three cleaning members 12 conform more closely to the circular shape of the disc 19. As mentioned above, a stub spindle may be provided for insertion in the collar 21 to engage the centre hole of a record disc 19 for cleaning the latter off the turntable 23.

In order to facilitate the manual rotation of the housing 10 around a stationary disc 19, a knob 25 is provided which is rotatably mounted at the tope of the housing 10. In particular, the knob has a downwardly extending hollow tubular projection 27 which passes through a complementary aperture in the top surface 26 of the centre one of the housing portions 11 and is restrained in position by an annular groove 28 in the projection 27 which engages the edge of the aperture in the top surface 26, see Figure 5.

In use, therefore, the housing 10 is first placed on the surface 18 of the disc 19 with the turntable spindle 22 engaging in the collar 21, and then the housing is rotated manually by the knob 25 at least once around the stationary disc.

During such rotation the friction exerted on each cylindrical cleaning member 12 by brushing contact with the surface 18 of the disc 19 is not sufficient to overcome the friction exerted by the mounting lugs 15, so that the members 12 do not rotate during normal cleaning. This is important as otherwise the members 12 would tend to roll over dust particles on the disc surface 18 and the cleaning efficiency would be much reduced. However, when a particular portion 17 of the outer surface 14 of a member 12 is clogged or worn it is a simple matter to manually rotate the member 12 about its longitudinal axis to expose a fresh portion 17 below the housing 10.

In order to accommodate warps and bumps in the disc surface 18 and maintain the cleaning members 12 in effective contact with the surfaces 18, the arm 20 and the three housing portions 11 are formed as a one-piece moulding of plastics material, and the connections 30 between adjacent housing portions 11 and the connection 31 between the arm 20 and the centre housing portion 11 each have a shallow cross-section whose width is reduced compared to the dimensions of the housing portions 11. The same is true of the connections 32 between opposite halves of each housing portion 11. The connections 30 permit a limited degree of flexing of each end housing portion 11 relative to the centre housing portion 11, the connection 31 permits a limited degree of flexing of the housing 10 as a whole relative to the arm 20, and the connections 32 permit a limited degree of flexing of each half of each housing portion 11 relative to the other half. The plastics material used may be an acetyl copolymer which has the desired elastic properties.

In order to permit the discharge of static electricity during cleaning, the outer surface 14 of at least one of the members 12 is conductive, for example by coating the nylon fibres with silver or carbon, and is electrically connected via a commutator to a conductive portion of the knob 25 whereby the static electricity is discharged through the user. The conductive member 12 is preferably one of the outer ones of the cleaning members 12, and in use, the housing 10 may be constrained to rotate such that the conductive member 12 is the trailing one of the three cleaning members. In this case, the leading two cleaning members may be wetted with a cleaning spray and the trailing conductive member left dry so that the cleaning action is essentially a wet-dry action. In order to constrain the housing 10 to be rotated by the knob 25 in only one direction of rotation, and also to provide the conductive connection to the trailing conductive member 12, the tubular projection 27 of the knob 25 has a concentric internal cylinder core 33, figure 5, which is integrally formed with the top surface of the knob 25. The top surface of the knob 25, including the central portion directly above the cylindrical core 33, has inset therein a metallic label 34 which has a portion 35 extending downwardly through the top surface of the knob into electrical contact with a metal washer 36 on the core 33.

A coil spring 37 is located on the cylindrical core 33 so that the uppermost turn of the coil spring abuts the washer 36. At its lowermost end the coil spring has a right-angled extension arm 38 which is secured between a pair of resilient plastic lugs 39 located on one of the connections 30. The extension arm 38 is bent at right angles so that it is located within the housing portion 11 which accommodates the conductive cleaning member 12, see figure 1, and abuts against this cleaning member.

In use any static electricity on a record disc surface is conducted through the conductive cleaning member 12, the extension arm 38 and the coil spring 37 to the metallic label 34, and is thereafter discharged through the user.

The coil spring 37 also serves to allow the knob 25 to be rotated substantially in one direction only. If the knob 25 can only be rotated in one direction then this permits the housing 10 to be rotated in one direction only. The reason for requiring a single direction of rotation for the housing 10 during cleaning is of course that the cleaning action is preferably a wet-dry action as mentioned above with the first two cleaning members 12 being wetted and the trailing cleaning member 12 being dry and also conductive. It is undesirable that a dry conductive cleaning member would clean the record disc surface first.

The coil spring 37 is wound on the cylindrical core 33 with almost no clearance so that if the cylinder is rotated in a direction which is the same as the wound direction of the coil spring 37 the latter (due to friction) will tend to tighten and lock onto the cylindrical core - thus preventing any further rotation of the knob 25. If the cylindrical core 33 is rotated in a direction which would tend to unwind the coil spring then the knob 25 can be fully rotated. During the rotation of the knob 25 in the latter direction the coil spring does not unwind to any great extent because as soon as it unwinds a little then it no longer creates friction between itself and the cylindrical core.

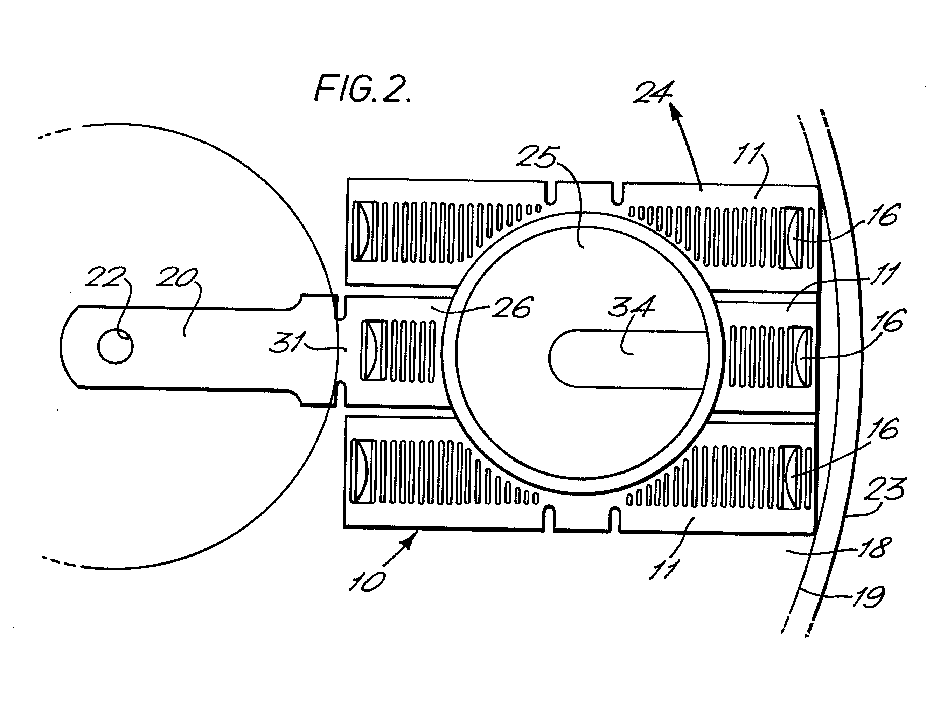

With reference to figures 2 and 5, as the housing 10 is rotated in the direction 24, the knob 25 is rotated in a clockwise direction which tends to unwind the coil spring on the cylindrical core and thus the housing 10 can be rotated fully around the record disc. If the housing 10 is rotated in the opposite direction to that shown by arrow 24 then the spring will tighten and lock onto the cylindrical core preventing further rotation of the knob 25. Note however that the housing may be moved slightly in the direction opposite to that shown by arrow 24 before tightening of the coil occurs, and this facilitates making an oscillatory motion with the housing 10 over a particularly dirty part of a record disc surface. The plastic lugs shown in figure 1 have not been shown in figure 5.

Referring to Figure 6 there is shown therein another construction for providing the conductive connection to the trailing conductive member 12. In this embodiment the centre one of the housing portions 11 is formed with a hollow tubular projection 45 which extends upwards from the top surface thereof. The tubular projection 45 has a top portion 46 having a central aperture 47. The knob 25 in this embodiment does not have the core 33 of Figure 5 but instead has three (only two shown) downwardly extending flanges 48 the free end of which has an outwardly extending shoulder portion 49. The flanges 48 are sufficiently resilient that they can be biassed towards each other so that they can be inserted through the aperture 47 after which they will return to their normal position. As shown in Figure 6 the shoulder portions 49 are engaged below the top portion 46 which prevents the knob 25 from being removed from the housing. A coil spring 50 is located on the tubular projection 45 and serves to support the knob 25 off the tubular projection 45 thus permitting easy rotation of the knob. At its lowermost end the coil spring 50 has an extension arm 51 which projects downwards through an aperture 52 in the housing for the conductive cleaning member 12. The free end 53 of the extension arm projects upwards slightly through another aperture in the housing which is spaced apart from the first aperture. The uppermost turn of the coil spring 50 abuts a thin metal plate or label 54 on the underneath surface of the knob 25 thus forming a sliding contact. A portion 58 of the metal plate 54 extends through an aperture 55 in the sidewall 56 of the knob and is bent to conform to the outer surface of the sidewall. This portion 58 is for a user of the apparatus to touch to discharge static electricity on a record disc surface as hereinbefore described. It will be apparent therefore that the knob 25 in this embodiment of the apparatus can rotate in both the clockwise and anticlockwise directions.

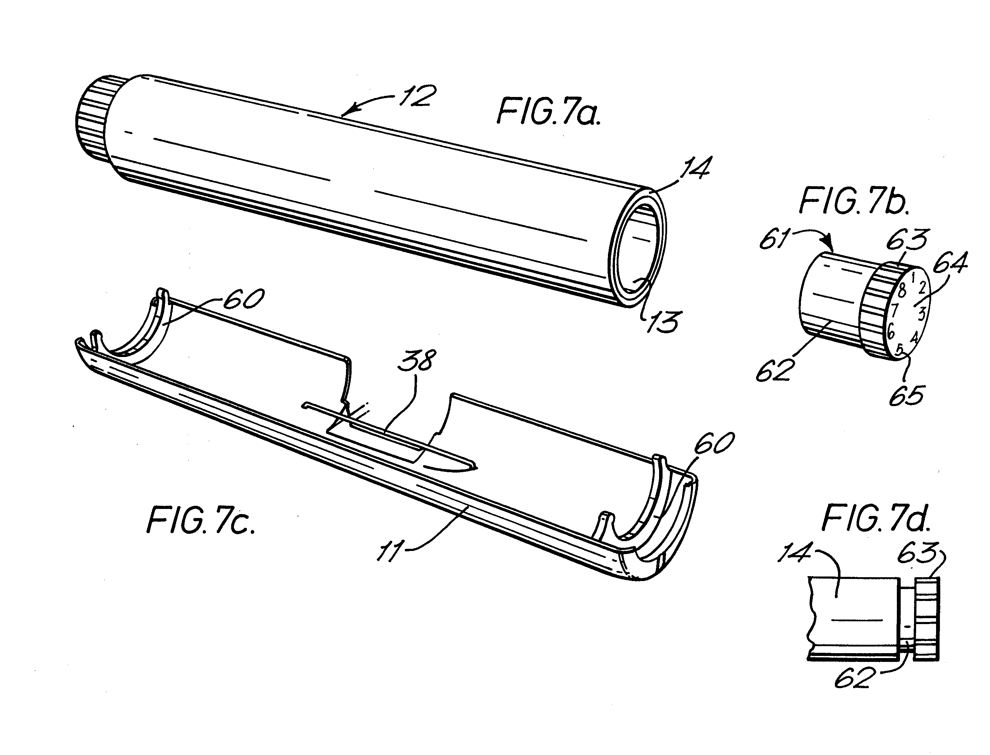

Referring now to Figures 7a, 7b, 7c and 7d there is shown another construction of each of the housing portions 11 and cleaning member 12. In this embodiment the housing portion 11 is that one which receives the conductive member 12 and the extension arm 38 (or 51) of the coil spring is also shown. The housing portion 11 has formed adjacent each end, a semi-circular resilient flange 60. The ends of the cleaning member 12 are closed by respective plugs 61. Each plug 61 has a body portion 62 and an end portion 63. The plugs are secured into the ends of the plastics tube 13 so that a small part of the body portion is exposed (Figure 7d). The cleaning member 12 is secured in the housing 11 by the exposed part of the body portion 62 (Figure 7d) snapping into engagement in a respective resilient flange 60 in the housing. The body portion 62 is an interference fit in the flanges 60 so that the cleaning member 12 is not freely rotatable in the housing portion 11. The cleaning member 12 is sufficiently secured in the flanges 60 that the member 12 does not rotate during normal cleaning as hereinbefore described. The face 64 of the end portion 63 of the plugs may have a marking scale 65 so that a new portion of the outer surface of the member 12 may be exposed by rotating the plug by one unit on the marking scale. Of course, since the plugs 61 are secured into the ends of the plastics tube 13 then the cleaning member will rotate as the plugs 61 are rotated.

It will be understood that it is not absolutely essential that each of the housing portions 11 and the arm 20, are connected together with connections which provide a limited degree of flexing as hereinbefore described. Indeed, the housings 11 and the arm 20 may all be formed of a substantially rigid one piece moulding.

CLAIMS:-

1. Apparatus for cleaning a record disc, characterised by a plurality of elongated cleaning members (12) mounted side-by-side in a housing (10), each cleaning member having a cleaning surface (17) which extends below the housing for contacting the surface of a record disc (19) to be cleaned, and means (20,21) for locating the housing for rotation about the centre of the disc, the cleaning members extending across the surface of the disc transverse to the direction of rotation of the housing.

2. Apparatus according to claim 1, wherein each cleaning surface (12) has a convex cross-section.

3. Apparatus according to claim 2, wherein each cleaning member (12) is in the form of a cylinder which is mounted in the housing (10) for rotation about its longitudinal axis and which has a longitudinal portion (17) of its outer surface extending below the housing to provide the said convex cleaning surface, the apparatus further including means (15) to restrain each cylinder against rotation by brushing contact with a disc (19) but being capable of manual rotation to bring a different longitudinal portion of its surface below the housing to provide a fresh cleaning surface.

4. Apparatus according to claim 3, wherein the restraining means (15) operates by friction.

5. Apparatus according to any preceding claim, wherein the cleaning members (12) are mounted in respective adjacent portions (11) of the housing (10) which are connected together with a limited degree of flexibility, and the locating means includes an arm (20) extending from one side of the housing in the opposite direction to the cleaning members, the housing and the arm also being connected

6.    Apparatus according to claim 5, wherein the arm (20) and housing (10) are formed as a one-piece moulding of plastics material, the flexible connections being provided by portions (30,31) of the plastics moulding of shallow cross-section and locally reduced width.

7.    Apparatus according to any preceding claim, further including a knob (25) rotatably mounted at the top of the housing (10).

8.    Apparatus according to claim 7, wherein the knob (25) is constrained to rotate substantially in a single direction only thereby permitting only a single direction of rotation of the housing (10).

9.    Apparatus according to claim 7 or 8, wherein at least one of the cleaning surfaces (12) is conductive and is electrically connected via a sliding contact (36,37) to a conductive part (34) of the knob.

10.    Apparatus according to claim 9 when dependent on claim 8, wherein the conductive cleaning surface is the trailing surface when the housing (10) is rotated in the direction permitted by the knob (25).

FIG.1.

FIG.3.

0143620

FIG.2.

0143620

FIG.4.

14 13 12

FIG.5.

25 35 34 36

27

26

12 38 37 28

33

FIG.6.

25 47 55

54 46 58
50 45 56
49 48 52

53

51

26

12

FIG.7a.

FIG.7b.

FIG.7c.

FIG.7d.